Europäisches Patentamt

(19) European Patent Office

Office européen des brevets

(11) Numéro de publication: **0 168 104**
A1

(12) # DEMANDE DE BREVET EUROPEEN

(21) Numéro de dépôt: **85201050.3**

(22) Date de dépôt: **02.07.85**

(51) Int. Cl.⁴: **H 04 N 11/08**
**H 04 N 11/00**

(30) Priorité: **03.07.84 FR 8410511**

(43) Date de publication de la demande:
**15.01.86 Bulletin 86/3**

(84) Etats contractants désignés:
**DE FR GB**

(71) Demandeur: **Laboratoires d'Electronique et de Physique Appliquée L.E.P.**
**3, Avenue Descartes**
**F-94450 Limeil-Brévannes(FR)**

(84) Etats contractants désignés:
**FR**

(71) Demandeur: **N.V. Philips' Gloeilampenfabrieken**
**Groenewoudseweg 1**
**NL-5621 BA Eindhoven(NL)**

(84) Etats contractants désignés:
**DE GB**

(72) Inventeur: **Marie, Gérard**
**Société Civile S.P.I.D. 209 rue de l'Université**
**F-75007 Paris(FR)**

(72) Inventeur: **Arragon, Jean-Pierre**
**Société Civile S.P.I.D. 209 rue de l'Université**
**F-75007 Paris(FR)**

(74) Mandataire: **Landousy, Christian et al,**
**Société Civile S.P.I.D. 209, Rue de l'Université**
**F-75007 Paris(FR)**

(54) Système de télévision à multiplex adapté à la diffusion d'images au format 5/3, émetteur et dispositif d'interface pour ce système, ainsi que récepteur de télévision équipé d'un tel dispositif.

(57) Système de télévision dans lequel les données numériques, les signaux de chrominance et les signaux de luminance sont multiplexés temporellement. Ce système, adapté à la diffusion d'images à un format voisin de 5/3, est tel que la compatibilité par rapport aux récepteurs capables de recevoir et de traiter le signal conforme au système MAC au format 4/3 est assurée sans changer ni la vitesse du débit numérique instantané, ni le taux de compression des signaux de vidéo. En outre, l'extension horizontale de l'image au format 5/3 est obtenue en réduisant la longueur de la salve de données précédant les signaux de vidéo et en supprimant un certain nombre de lignes de vidéo situées en haut et/ou en bas de l'image, afin de pouvoir placer les données supprimées dans les salves à la place de ces lignes de vidéo et à l'intérieur d'un certain nombre de périodes de ligne antérieurement non utilisées pendant les retours de trame.

EP 0 168 104 A1

## SYSTEME DE TELEVISION A MULTIPLEX ADAPTE A LA DIFFUSION D'IMAGES AU FORMAT 5/3, EMETTEUR ET DISPOSITIF D'INTERFACE POUR CE SYSTEME, AINSI QUE RECEPTEUR DE TELEVISION EQUIPE D'UN TEL DISPOSITIF

La présente invention concerne un système de télévision comprenant au moins un émetteur et au moins un récepteur, l'émetteur comprenant un circuit de codage pour multiplexer temporellement des signaux de vidéo et de données numériques et pour diffuser le signal multiplexé obtenu, ce signal étant tel que pendant des périodes de ligne une salve de données précède les signaux de vidéo, le récepteur comprenant un circuit de décodage adapté pour fournir des signaux de vidéo contenant de l'information correspondant pour la plus grande part à l'information de vidéo fournie au circuit de codage, les circuits de codage et de décodage étant tels que l'image reproduite à la réception a un format voisin de 5/3, la vitesse du débit numérique instantané et le taux de compression des signaux de vidéo étant les mêmes que selon la norme du système de télévision MAC en ce qui concerne le format 4/3 de l'image, et la longueur de la salve de données étant plus courte que dans ladite norme.

L'invention concerne également un émetteur capable d'émettre le signal conforme à un tel système, un dispositif d'interface pour recevoir et traiter ce signal et un récepteur de télévision équipé d'un tel dispositif.

L'amélioration de la résolution des images de télévision s'accompagnera d'un changement de format pour s'approcher de ceux utilisés pour le cinéma. Pour un système de télévision à haute définition dit HDTV, il a été préconisé au Japon un format 5/3. D'autres propositions préconisent même des valeurs encore plus élevées (5,3/3 ou 5,5/3 par exemple).

En Europe où le nombre de canaux de télédiffusion est très limité (par exemple, par satellite, cinq canaux seulement par nation dans la bande des 12 GHz) du fait du grand nombre de pays et de langages différents, il est très important d'assurer une compatibilité entre le nouveau format envisagé et l'ancien format 4/3 qui assurera, de toute façon, la majorité des programmes jusqu'à la fin du siècle. Par compatibilité, on entend que les récepteurs de première génération pourront recevoir, en format 4/3 bien entendu, les nouvelles émissions diffusées au format 5/3.

T.J. Long de l'IBA a proposé un tel système dans une communication présentée au Symposium de Montreux 1983 ("Why HDTV?", T.J. Long, Independant Broadcasting Authority, United Kingdom, pp. 27-47) dans le cas d'un standard initial de type C-MAC. Pour arriver au format 5/3 sans perdre de hauteur de l'image, il préconise deux moyens:

a) réduction de la durée de la salve de données à 20 Mb/s, au début de chaque ligne, de 10 /us à 3 /us environ pour n'assurer qu'un programme en stéréo au lieu de 8 voies de son, cette réduction permettant de porter le nombre d'échantillons des signaux de chrominance C et de luminance Y respectivement de 350 à 400 et de 700 à 800, ce qui conduit à un format 4,6/3;

b) pour atteindre le format 5/3, transmission des 80 échantillons supplémentaires Y et des 40 échantillons supplémentaires C correspondant aux deux bords extrêmes gauche et droit de l'image pendant des périodes de ligne qui sont libres pendant les périodes de retour de trame.

La compatibilité de ce système sera assurée avec les récepteurs MAC de première génération fonctionnant au format 4/3 à condition que l'on ait prévu, dans ces récepteurs, la possibilité de changer la durée des salves de données, la position de la période de lecture du niveau d'alignement qui donne la référence du niveau de gris moyen, et le début et la fin des périodes de mise en mémoire des signaux C et Y. Dans le système MAC-C défini dans la deuxième version révisée de la norme SPB 284 (juin 1983) de l'Union Européenne de Radiodiffusion (l'UER), toutes ces informations sont contenues dans la ligne 625, et il n'y a donc pas de difficulté en soi à prévoir cette compatibilité On peut cependant utiliser des solutions plus simples, par exemple la lecture de quelques bits seulement qui indiqueraient que l'on passe en format 5/3, ces quelques bits pouvant être situés soit dans la ligne 625 (dans SDF SCR par exemple, S D F S C R, de Static Data Frame Service Configuration Reference, étant un mot, défini par la norme, qui définit lui-même la configuration des services ou dans MVSCG, M V S C G, de Multiplex and Video Scrambling Control Group, étant également un mot, défini par la norme, qui décrit l'organisation physique du signal) soit dans la voie spécialisée du multiplex de son/données véhiculées par les paquets portant l'adresse zéro (dans VCONF par exemple, V C O N F, de Video Configuration, étant un mot, défini par la norme, qui décrit la configuration du signal vidéo).Connaissant cette information, on irait lire dans une mémoire morte (ROM) les bornes des différents intervalles de données, niveau d'alignement, chrominance et luminance. Il serait d'ailleurs possible de prévoir cette ROM amovible, de façon qu'il ne soit pas nécessaire d'avoir déjà spécifié toutes les caractéristiques du système de deuxième génération, au format 5/3, avant de lancer la fabrication des récepteurs de première génération, au format 4/3.

On peut cependant formuler deux types de critiques vis-à-vis de la solution proposée par l'IBA:

a) la réduction de la durée de la salve de données réduit la capacité de la voie numérique dans un rapport 4, ce qui est déjà beaucoup dans le cas du système C-MAC utilisant un débit instantané de 20 Mb/s, puisque cela ne laisse qu'un canal stéréophonique, mais devient inacceptable dans le cas du système D2-MAC qui utilise un débit instantané de 10 Mb/s, car cela ne laisserait plus qu'une seule voie monophonique;

b) la transmission des échantillons supplémentaires pendant des périodes de ligne  libres nécessite l'utilisation de mémoires rapides de grande capacité et pose en outre le problème de la visibilité des raccords à gauche et à droite de l'image, visibilité qui peut apparaître dès que le canal de transmission introduit une distorsion des signaux provenant par exemple d'une limitation de la bande passante ou de phénomènes d'échos.

Le but de l'invention est de remédier à ces inconvénients. L'invention concerne à cet effet un système de télévision tel que défini dans le préambule de cette description, caractérisé en ce que le signal multiplexé est tel que des données non présentes dans les salves sont transmises pendant un certain nombre de périodes de ligne non utilisée pendant le retour de trame dans le cas de ladite norme.

Avantageusement, le système de télévision selon l'invention peut être de plus caractérisé en ce qu'en outre des données non présentes dans les salves sont transmises pendant un certain nombre de périodes de ligne situées au début et/ou à la fin de la périods de trame et occupées par des signaux de vidéo dans le cas de ladite norme. Dans les opérations ainsi prévues, la réduction de la longueur de la salve de données conduit à une durée inférieure ou égale à 3 µs, durée qui peut même être nulle, et la diffusion des données intervient dans les périodes de ligne laissées libres pendant les retours de trame ainsi que dans des périodes de ligne qui contenaient les informations correspondant au haut et/ou au bas de l'image dans le cas de l'émission au format 4/3.

Cette solution ne requiert pas de mémoire rapide de grande capacité comme le demandait l'étape b) de la solution de l'IBA. En ce qui concerne le son et les données, on peut calculer qu'à la limite, c'est-à-dire lorsque la ligne contenant des informations de vidéo ne contient plus de données à l'exception éventuellement de quelques bits de synchronisation de ligne, une mémoire de 10 kbits par voie de son est suffisante pour assurer l'étalement des signaux d'audio pendant les 20 ns qui suivent chaque période de retour de trame. Comme la deuxième version révisée de la norme SPB 284 de l'UER prévoit une mémoire de 16 kbits par voie de son démodulée, aucune mémoire supplémentaire n'est donc nécessaire.

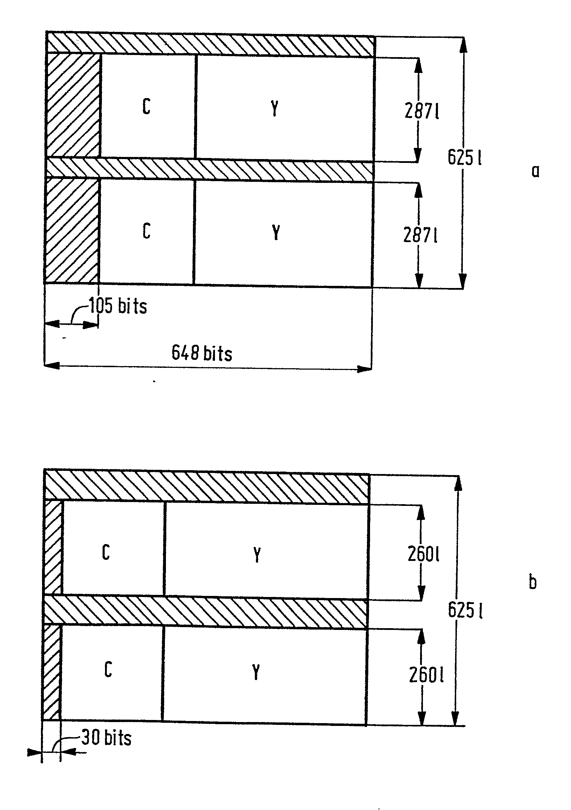

Les particularités et avantages de l'invention apparaîtront maintenant de façon plus détaillée dans la description qui suit où est donné un exemple de système adapté au cas du D2-MAC, mais qui pourrait aussi bien être appliqué au C-MAC ou au B-MAC, et ceci avec l'aide de la figure où le signal de télévision est représenté schématiquement pour les deux trames qui forment une image à 625 lignes:

- D2-MAC au format 4/3 (voir la fig. en a):

| | |
|---|---|
| - lignes vidéo utiles par image | 574 |
| - lignes réservées à différentes informations | 5 |
| - lignes Teletext ou Antiope | 18 |
| - lignes utilisées complètement par la voie de données | 28 |
| | 625 lignes |

- salves de données de (624-28) lignes: 5 ou 6 bits de synchronisation + 99 bits de données.

Comme une ligne entièrement utilisée par les données peut contenir par exemple 6 bits de synchronisation et 642 bits de données, la capacité de multiplex de données est de:

(642 x 28) + (596 x 99) = 76 980, soit 102 paquets de 751 bits + 378 bits inutilisés, donc une capacité suffisante pour 5 sons de haute qualité.

- D2-MAC au format 5/3 (voir la fig. en b):
  - lignes vidéo utiles par image     520 (perte 9,4%)
  - lignes réservées à différentes informations   5
  - lignes utilisées complètement par la voie de données   100

  ————

      625 lignes

- salves de données de (624-100) lignes: 5 ou 6 bits de synchronisation + 24 bits de données.

La capacité du multiplex de données est de:

(642 x 100) + (524 x 24) = 76 776, soit 102 paquets de 751 bits + 174 bits inutilisés.

La récupération de 99-24 = 75 bits de données par salve, à 10 Mb/s, correspond à 150 échantillons vidéo, soit 100 échantillons pour la luminance Y en sus des environ 700 échantillons du format 4/3 et 50 échantillons pour la chrominance C. En tenant compte de la réduction de la hauteur de l'image, le format exact est égal à:

$$\frac{4}{3} \times \frac{800}{700} \times \frac{574}{520} = \frac{5,05}{3} .$$

Il faut qu'a la réception une information puisse être reçue au sujet du format de l'image ayant été émis. Pour cela, une identification de format peut être fournie par certains bits de la ligne 625 à l'usage d'un dispositif d'interface incorporé ou non au récepteur de télévision et destiné à permettre la réception d'images de télévision diffusées selon le système décrit plus haut. Ce dispositif comprend en outre une mémoire morte (ROM) qui indique quelles sont les bornes temporelles des différents signaux dans la nouvelle norme.

Bien entendu, des variantes sont possibles. En particulier, il est possible de réduire à zéro les données utiles des salves pendant les signaux de vidéo. Pour garder la capacité de 5 voies de son de haute qualité, il faut utiliser alors 120 lignes complètes pour les données, ce qui conduit à une perte verticale de 13% et à un format d'image de 5,45/3.

Les mêmes solutions sont évidemment également applicables au MAC-C. Dans ce cas, on garde la capacité de 8 voies de son sans Telétext, par exemple, avec une perte de 7% de hauteur d'image et un format de 5/3 ou avec une perte de 9% de hauteur d'image et un format 5,2/3.

Il est également possible de diminuer la perte de hauteur verticale de l'image au prix de la suppression de voies de son. En D2-MAC, la réduction à 3 ou 4 voies de son réduirait la perte de hauteur à 5 ou 7% respectivement et, en C-MAC, la réduction à 6 voies de son réduirait la perte de hauteur à 5% au format 5/3, par exemple.

Pour éviter que la partie perdue en haut et en bas de l'image ne soit visible sur les récepteurs fonctionnant au format 4/3, il suffit que ces récepteurs soient équipés, dès l'origine, d'un dispositif mettant le signal de chrominance au niveau zéro et le signal de luminance à un niveau de noir ou de gris lorsque ce sont des données numériques qui occupent la place des signaux de vidéo. Cette commande peut être obtenue soit en lisant les informations de la ligne 625, soit en lisant celles de la ROM, ou encore en détectant directement la présence de signaux numériques dans les lignes concernées.

Selon une autre caractéristique de l'invention et dans le but de diminuer la perte de hauteur de l'image ou d'éviter la réduction du nombre de voies de son transmises, il est possible de diminuer la résolution horizontale ou verticale des bords droit et gauche de l'image qui sont ajoutés lorsque l'on passe du format 4/3 au format 5/3. Le moyen le plus simple pour y parvenir est d'effectuer un échantillonnage plus lent de ces bords d'image. Un échantillonnage à fréquence moitié, par exemple, c'est-à-dire à 6,75 MHz pour la luminance et à 3,375 MHz pour la chrominance, conduit ainsi à une résolution horizontale moitié de ces bords d'image. Pour éviter une trop grande différence de résolution entre les bords et la partie centrale, on peut, par exemple, effectuer un échantillonnage en quinconce, c'est-à-dire que la moitié des échantillons seulement est transmise en choisissant alternativement les échantillons pairs puis les échantillons impairs, de ligne à ligne pour la luminance et de deux lignes en deux lignes pour la chrominance. A la réception, on recouvre dans ce cas une résolution horizontale des bords égale à celle du centre par combinaison des informations de lignes successives pour la luminance et de deux lignes en deux lignes pour la chrominance. Pour éviter que ce traitement ne diminue la résolution verticale des bords d'image, on peut également employer un circuit de détection de changement de l'image dans le sens vertical, de façon à n'effectuer le traitement précédent que dans les parties des bords d'image ne comportant pas de transition verticale importante.

On peut également combiner des informations de lignes géométriquement consécutives et appartenant à deux trames successives en utilisant des mémoires de trame contenant les informations des bords de l'image seulement et en supprimant ce traitement dès qu'un mouvement est détecté dans la partie concernée des bords de l'image.

L'exemple ci-dessous, à savoir le cas d'un système D2-MAC au format 5/3 avec résolution réduite sur les bords, illustre l'intérêt de cette réduction d'un facteur 2 de la densité des échantillons des bords d'image transmis:

- lignes vidéo utiles par image ........................ 544 (perte de 5, 2%)
- lignes réservées à différentes informations ........ 5
- lignes utilisées complètement par la voie de données 76
$$\overline{\phantom{625}}$$
$$\cdot\ 625$$

- salves de données de (624-76) lignes: 5 ou 6 bits de synchronisation + 51 bits de données

La capacité du multiplex de données est de:
(642 x 76) + (548 x 51) = 76 740, soit 102 paquets de 751 bits + 138 bits inutilisés, donc une capacité suffisante pour 5 sons de haute qualité.

La récupération de 99 - 51 = 48 bits de données par salve correspond avec sous-échantillonnage au facteur 1/2, à 192 échantillons vidéo, soit 128 échantillons pour Y et 64 échantillons pour C. En tenant compte de la réduction de la hauteur de l'image, le format est égal à:
$$\frac{4}{3} \times \frac{828}{700} \times \frac{574}{544} = \frac{4,99}{3}.$$

Dans le cas où l'on se contenterait de 4 voies de son de haute qualité, la perte de hauteur d'image ne serait que de 2,4%. Pour 6 voies de son, elle serait de 8,4%.

REVENDICATIONS :

1.      Système de télévision comprenant au moins un émetteur et au moins un récepteur, l'émetteur comprenant un circuit de codage pour multiplexer temporellement des signaux de vidéo et de données numériques et pour diffuser le signal multiplexé obtenu, ce signal étant tel que pendant des périodes de ligne une salve de données précède les signaux de vidéo, le récepteur comprenant un circuit de décodage adapté pour fournir des signaux de vidéo contenant de l'information correspondant pour la plus grande part à l'information de vidéo fournie au circuit de codage, les circuits de codage et de décodage étant tel que l'image reproduite à la réception a un format voisin de 5/3, la vitesse du débit numérique instantané et le taux de compression des signaux de vidéo étant les mêmes que selon la norme du système de télévision MAC en ce qui concerne le format 4/3 de l'image, et la longueur de la salve de données étant plus courte que dans ladite norme, caractérisé en ce que le signal multiplexé est tel que des données non présente dans les salves sont transmises pendant un certain nombre de périodes de ligne non utilisées pendant le retour de trame dans le cas de ladite norme.

2.      Système de télévision selon la revendication 1, caractérisé en ce qu'en outre des données non présentes dans les salves sont transmises pendant un certain nombre de périodes de ligne situées au début et/ou à la fin de la période de trame et occupées par des signaux de vidéo dans le cas de ladite norme.

3.      Système de télévision selon la revendication 1 ou 2, caractérisé en ce que la fréquence d'échantillonnage des signaux de vidéo pour les bords latéraux de l'image est plus basse que la fréquence d'échantillonnage pour ces signaux pour la partie centrale de l'image correspondant au signal selon ladite norme.

4.      Système de télévision selon la revendication 3, caractérisé par la transmission de la moitié seulement des échantillons des signaux de vidéo pour les bords latéraux de l'image en ce que les échantillons pairs puis les échantillons impairs sont choisis alternativement pour la transmission, de ligne à ligne pour la luminance et de deux lignes en deux lignes pour la chrominance.

5.      Système de télévision selon l'une quelconque des

revendications précédentes, caractérisé en ce que le signal multiplexé contient dans la dernière ligne de chaque image une information d'identification du format de l'image.

6. Emetteur capable d'émettre le signal conforme au système de télévision selon l'une quelconque des revendications 1 à 5.

7. Dispositif d'interface pour recevoir et traiter le signal émis par l'émetteur selon la revendication 6 lorsque ce signal est conforme au système de télévision selon la revendication 5, caractérisé en ce que ce dispositif comprend un circuit d'identification de format de l'image par lecture de ladite information d'identification et une mémoire morte pour indiquer les bornes temporelles des signaux de luminance, de chrominance et de données numériques.

8. Dispositif selon la revendication 7 pour recevoir et traiter le signal émis par l'émetteur selon la revendication 6 lorsque ce signal est conforme au système de télévision selon les revendications 2 et 5, caractérisé en ce que ce dispositif comprend un circuit de mise à un niveau de noir ou de gris des signaux de luminance et de mise au niveau zéro du signal de chrominance pendant les périodes de ligne durant lesquelles des données numériques sont transmises en remplacement de signaux de vidéo transmis dans le cas de ladite norme.

9. Dispositif selon la revendication 7 pour recevoir et traiter le signal émis par l'émetteur selon la revendication 6 lorsque ce signal est conforme au système de télévision selon les revendications 4 et 5, caractérisé en ce que ce dispositif comprend un circuit de détection de changement de l'image dans le sens vertical et un circuit pour combiner les signaux de luminance de lignes successives et les signaux de chrominance de deux lignes en deux lignes lorsque dans les bords latéraux de l'image une transition verticale détectée est inférieure à une certaine valeur.

10. Dispositif selon la revendication 7 pour recevoir et traiter le signal émis par l'émetteur selon la revendication 6 lorsque ce signal est conforme au système de télévision selon les revendications 4 et 5, caractérisé en ce que ce dispositif comprend un circuit de détection de mouvement et un circuit pour combiner les signaux de vidéo de lignes géométriquement consécutives sur l'image et appartenant à deux trames successives lorsqu'un mouvement n'est pas détecté dans la partie concernée des bords latéraux de l'image.

11.    Récepteur de télévision capable de recevoir et de traiter le signal conforme au système de télévision MAC en ce qui concerne le format 4/3 de l'image selon ce système et comprenant un dispositif d'interface selon l'une quelconque des revendications 7 à 10.

0168104

a

b

**0168104**

Numero de la demande

RAPPORT DE RECHERCHE EUROPEENNE

Office européen
des brevets

EP 85 20 1050

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int CI 4) |
|---|---|---|---|
| A | IEEE SPECTRUM, vol. 20, no. 12; décembre 1983, pages 46-51, IEEE, New York, US; R.K. JURGEN: "The problems and promises of high-definition television" | 1,2 | H 04 N 11/08 H 04 N 11/00 |
| A | DOCUMENTS CCIR STUDY GROUPS, 1982-1986, Document 10-11SS/106-E, 23 septembre 1983, pages 1-19, 10-11S-2, "Draft new report", "Satellite transmission of multiplexed analogue component (MAC) television signals" * Page 12, paragraphes 3.6.2; figure 2 * | 1 | |

DOMAINES TECHNIQUES RECHERCHES (Int. CI 4)

H 04 N 11/06
H 04 N 11/08
H 04 N 11/00

Le présent rapport de recherche a été établi pour toutes les revendications

| Lieu de la recherche LA HAYE | Date d'achèvement de la recherche 07-10-1985 | Examinateur SIX G.E.E. |
|---|---|---|